# EUROPEAN PATENT SPECIFICATION

(11) **EP 1 983 871 B1**
(45) Date of publication and mention of the grant of the patent: **21.07.2010**
(21) Application number: 07711510.3
(22) Date of filing: 13.02.2007
(51) Int. Cl.: A47J 31/40

(54) **APPARATUS FOR PRODUCING A BREW OF AN AROMATIC DRINK**
VORRICHTUNG ZUR HERSTELLUNG EINES AUFGEBRÜHTEN AROMATISCHEN GETRÄNKS
APPAREIL POUR PRODUIRE UNE INFUSION DE BOISSON AROMATIQUE

(30) Priority: 17.02.2006 IT MI20060301
(43) Date of publication of application: 29.10.2008
(73) Proprietor: Samar Technologies Ltd., Neapoli, Limassol (CY)
(72) Inventor: RICOTTI, Maddalena, 27045 Casteggio (Pavia) (IT)
(74) Representative: Kohn, Philippe
(86) International application number: PCT/EP2007/001202
(87) International publication number: WO 2007/093355

(56) References cited:
- EP-A- 1 327 407
- FR-A- 547 071
- FR-A- 2 873 011
- FR-A1- 2 617 389
- FR-A1- 2 849 760
- US-A- 2 778 739

## Description

The present invention refers to an apparatus for producing a brew of an aromatic drink.

For some time there have been automatic or semi-automatic machines on the market that have a brewing group suitable for producing an aromatic brew through passage of water through a capsule containing the aromatic essence.

Coffee machines, for example the one disclosed in document FR-2849760, belong to this category.

One of the greatest limitations and drawbacks of such machines consists of their low flexibility of use that does not allow them to adapt easily to the preparation of different sorts of drink, or that allows it but at the expense of the quality of the end product: indeed, since the water brewing circuit up to the external dispenser of the end product is indistinct, irrespective of the type of drink desired, the drink produced last can be polluted by residues of the drink produced in the previous operating cycle, which is made even worse if the drink produced in the previous operating cycle is of a different type, since in this case the organoleptic properties of the drink produced could substantially degrade.

The cylindrical or frusto-conical configuration often adopted for the capsule also sometimes penalises the quality of the brew because it can consolidate the possible preferential paths which arise due to the brewing water that is thus unable to interact homogeneously with the content of the capsule. Indeed, such a configuration creates a regular path without discontinuities for the brewing water, which promotes a substantially smooth flow, whereas a turbulent motion would be preferable to have a brew that is more uniform over the entire volume of the capsule.

The technical task proposed of the present invention is, therefore, that of making an apparatus for producing a brew of an aromatic drink, which allows the aforementioned technical drawbacks of the prior art to be eliminated.

In this technical task, a purpose of the invention is to make an apparatus for producing a brew of an aromatic drink suitable for simultaneously or consecutively producing aromatic drinks even of different types without the risk of them contaminating one another.

Another purpose of the invention is to make an apparatus for producing a brew of an aromatic drink that makes a brew with a uniform and turbulent flow over the entire volume of the capsule to optimise the organoleptic properties of the drink produced, be it an aromatic drink that is hot or cold, still or sparkling, tea-based, coffee-based, a herbal tea, a soup, a thirst-quencher, an energy drink or a food supplement.

Another purpose of the invention is to make an apparatus for producing a brew of an aromatic drink that flexibly adapts to making the brew from aromatic essences that are insoluble, partially soluble or completely soluble in water.

The last but not least purpose of the invention is to make an apparatus for producing a brew of an aromatic drink that is structurally simple and cost-effective, but extremely reliable and functional.

The technical task, as well as these and other purposes, according to the present invention, are accomplished by making an apparatus for producing a brew of an aromatic drink according to claim 1.

Other characteristics of the present invention are, moreover, defined in the subsequent claims.

Further characteristics and advantages of the invention shall become clearer from the description of a preferred but not exclusive embodiment of the apparatus for producing a brew of an aromatic drink according to the finding, illustrated for indicating and not limiting purposes in the attached drawings, in which:

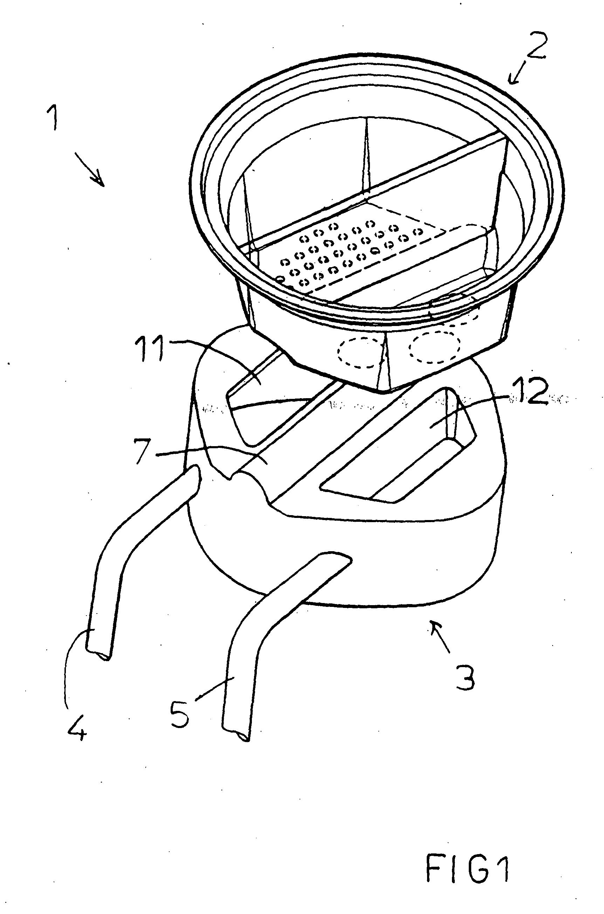

figure 1 shows a perspective view of the main body of the capsule and of the disassembled dispensing device in accordance with the present finding;

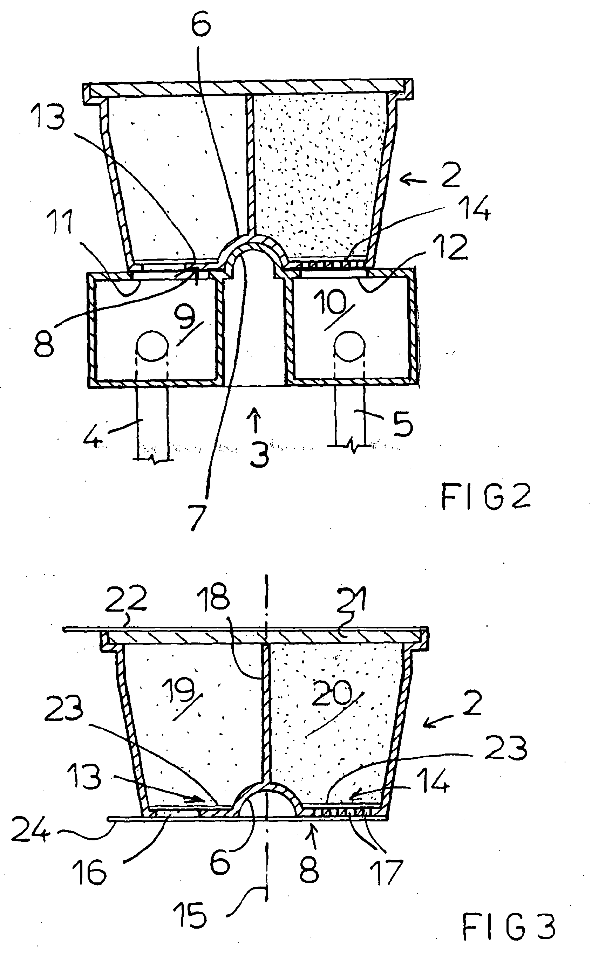

figure 2 shows a top side view of the set of figure 1, sectioned in a plane containing its central axis, and showing the capsule complete with the filters arranged at its base and at its top;
figure 3 is a view of the capsule of figures 1 and 2 sectioned axially, complete with all of its constituent parts.

With reference to the quoted figures, an apparatus for producing a brew of an aromatic drink is shown, wholly indicated with reference numeral 1.

The apparatus 1 comprises a capsule 2, containing the powder of one or more aromatic essences with which to make the brew, able to be associated with a dispensing device 3 having at least a first and a second dispensing path 4 and 5 hydraulically separate from one another.

With term brew we refer to a procedure consisting of a passage of hot water through powder or small particles of an aromatic essence that can be insoluble, partially soluble or completely soluble in water.

The apparatus 1 also has forced positioning means between the capsule 2 and the dispensing device 3.

In particular the forced positioning means comprise a recess 6 in the capsule 2 with a shape matching a projection of the dispensing device 3, or vice-versa.

The recess 6 is preferably located on the base 8 of the capsule 2.

The recess 6, round in shape, is advantageously suitable for breaking the entering flow of brewing water that strikes against it thus contributing to creating a turbulent regime that promotes the uniform distribution of the water through the capsule 2.

The dispensing device 3 comprises at least a respective first and second compartment 9 and 10, hydraulically separate from one another having the respective first and second dispensing path 4 and 5.

The respective first and second compartment 9 and 10 in turn have a respective first and second window 11 and 12 suitable for interfacing with a respective first and second portion 13 and 14 of the base 8 of the capsule 2.

Preferably, the first and second window 11 and 12 are positioned on the opposite side with respect to the projection 7, and similarly the first and second portion 13 and 14 of the base 8 of the capsule are positioned on the opposite side with respect to the recess 6 of the base 8 of the capsule 2.

The recess 6 preferably extends along a diameter of the base 8 of the capsule 2 even if, in a possible variant, the recess 6 extends eccentrically along the base 8 of the capsule 2, for example at the perimeter of the capsule 2.

The capsule 2 is substantially a prism with main central axis 15 and polygonal cross section, tapered towards its base 8.

For example, the capsule 2 is a hexagonal prism the configuration of which creates spatial discontinuities that allow possible preferential paths of the water to be broken and allow a more uniform redistribution of the brewing water through the entire section of the capsule 2.

The respective first and second portion 13 and 14 of the base 8 of the capsule 2 have respective first and second holes 16 and 17 for releasing the brew to the respective first and second compartment 9 and 10.

The first and second release holes 16 and 17 can have the same diameter or, as shown, have different diameters.

Preferably, but not necessarily, the capsule 2 has a separating wall 18 on the inside that defines a first chamber 19 for containing a first aromatic essence, to which the first portion 13 of the base 8 of the capsule 2 belongs, and a second chamber 20 for containing a second aromatic essence, to which the second portion 14 of the base 8 of the capsule 2 belongs.

The separating wall 18 extends from the recess 6 and perpendicular to the base 8.

Preferably, in the first chamber 19 there is coffee powder, whereas in the second chamber 20 there is a different sort of aromatic essence suitable for brewing or water-soluble.

The capsule 2 comprises a first filter 21 applied so as to cover its top end and optionally, as shown, a first removable protection tab 22 lying over and perimetrically glued or welded to its top end, a second filter 23 applied so as to cover its base 8 and optionally, as shown, a second removable protection tab 24 lying over and perimetrically glued or welded to its base 8.

In the illustrated solution, the filter 23 is divided into two portions on opposite sides of the recess 6.

The tabs 22 and 24 should, of course, be removed before using the capsule 2.

Finally, the apparatus 1 comprises a supply (not shown) of brewing water selectively or simultaneously to the first and second chamber 19 and 20.

The operation of the apparatus for producing a brew of an aromatic drink according to the invention is clear from what has been described and illustrated and, in particular, it is substantially the following.

If the capsule 2 does not have a separating wall and therefore there is no division defined between chambers for containing the aromatic essences, a single aromatic essence fills the capsule 2 and a single type of drink can be dispensed, during an operating cycle of the apparatus 1, simultaneously through the two dispensing paths 4 and 5.

In this case the first and second holes of the base 8 shall have the same diameter, which shall depend upon the type of aromatic drink to be produced.

On the other hand, in the case in which the capsule is divided by the separating wall 18 into two chambers 19 and 20 filled with different sorts of aromatic essences, the supply pumps a first flow of water into the first chamber 19 and a second flow of water into the second chamber 20 that will produce two distinct and separate brewing processes that can take place simultaneously or even at different times as required.

The apparatus for producing a brew of an aromatic drink thus conceived can undergo numerous modifications and variants, all covered by the inventive concept.

In a possible variant, for example, the chambers 19 and 20 for housing the essences can be arranged concentrically: the first chamber shall be central and the second chamber shall extend around the first chamber. Of course, the configuration of the dispensing device 3 shall be adapted by foreseeing the compartments 9 and 10 arranged concentrically so as to each interface with the holes of a corresponding chamber for housing the essences.

In another possible variant, as noted, the forced positioning means can be foreseen on the side and not at the centre of the capsule and the dispensing device: in particular, the recess of the capsule can be foreseen at the meeting area between its side wall and its base, and thus the projection on the dispensing device shall also be modified accordingly.

Of course, moreover, all of the details can also be replaced by technically equivalent element.

In practice, the materials used, as well as the sizes, can be whatever according to the requirements and the state of the art.

## Claims

1. Apparatus (1) for producing a brew of an aromatic drink, comprising one capsule (2) containing one or more aromatic essences with which to make the brew, and a dispensing device (3) being able to be associated with said capsule (2), **characterized in that** the apparatus (1) has at least a first dispensing path (4) and a second dispensing path (5), said first and second hydraulic paths (4, 5) being hydraulically separated from one another and being both (4, 5) associated with said capsule (2), and forced positioning means between said capsule (2) and said dispensing device (3).

2. Apparatus for producing a brew of an aromatic drink according to claim 1, **characterised in that** said forced positioning means comprise a recess (6) in said capsule (2) with a shape matching projection (7) of said dispensing device (3), or vice-versa.

3. Apparatus for producing a brew of an aromatic drink according to claim 2, **characterised in that** said recess (6) is located on a base (8) of said capsule (2).

4. Apparatus for producing a brew of an aromatic drink according to anyone of the previous claims, **characterised in that** said dispensing device comprises at least a respective first compartment (9) and second (10) compartment, hydraulically separated from one another, having said respective first dispensing path (4) and second dispensing path (5), said respective first and second compartments (9, 10) having a respective first window (11) and second window (12) suitable for interfacing with a respective first portion (13) and second portion (14) of said base (8) of the capsule (2).

5. Apparatus for producing a brew of an aromatic drink according to claim 4 taken in combination with claim 2 or claim 3, **characterised in that** said first (11) and second (12) windows are positioned on the opposite side with respect to said projection (7).

6. Apparatus for producing a brew of an aromatic drink according to claim 3, **characterised in that** said recess (6) extends along a diameter of the base (8) of said capsule (2).

7. Apparatus for producing a brew of an aromatic drink according to claim 3, **characterised in that** said recess (7) extends eccentrically along the base (8) of said capsule (2).

8. Apparatus for producing a brew of an aromatic drink according to anyone of the previous claims, **characterised in that** said capsule (2) comprises a base (8) and is substantially a prism with a main central axis (15) and a polygonal cross section, tapered towards said base (8).

9. Apparatus for producing a brew of an aromatic drink according to anyone of the previous claims, **characterised in that** at least one of said essences is coffee.

10. Apparatus for producing a brew of an aromatic drink according to anyone of the previous claims, **characterised in that** least one of said essences is water-soluble.

11. Apparatus for producing a brew of an aromatic drink according to claim 4, **characterised in that** said respective first and second portions (13, 14) of said base (8) have respective first and second holes (16, 17) for releasing the brew to said respective first and second compartments (9, 10).

12. Apparatus for producing a brew of an aromatic drink according to claim 11, **characterised in that** said first and second release holes (16, 17) have the same diameter.

13. Apparatus for producing a brew of an aromatic drink according to claim 11, **characterised in that** said first and second release holes (16, 17) have a different diameter.

14. Apparatus for producing a brew of an aromatic drink according to claim 4, **characterised in that** said capsule (2) has a separating wall (18) on the inside that defines a first chamber (19) for containing a first aromatic essence, to which said first base portion (13) belongs, and a second chamber (20) for containing a second aromatic essence, to which said second base portion (14) belongs.

15. Apparatus for producing a brew of an aromatic drink according to claim 14 in combination with claim 2 or claim 3, **characterised in that** said separating wall (18) extends from said recess (7) and perpendicularly to said base (8).

16. Apparatus for producing a brew of an aromatic drink according to anyone of the previous claims, **characterised in that** said capsule (2) comprises a first filter (21) applied so as to close its top end.

17. Apparatus for producing a brew of an aromatic drink according to anyone of the previous claims, **characterised in that** said capsule (2) comprises a second filter (23) applied to a base (8) of the capsule.

18. Apparatus for producing a brew of an aromatic drink according to anyone of the previous claims, **characterised in that** said capsule (2) comprises a first removable protection tab (24) of its top end.

19. Apparatus for producing a brew of an aromatic drink according to anyone of the previous claims, **characterised in that** said capsule (2) comprises a second removable protection tab (25) of the base (8) of the capsule.

20. Apparatus for producing a brew of an aromatic drink according to claim 4, **characterised in that** it comprises a supply of brewing water selectively or simultaneously to said first and second compartments (9, 10).

## Patentansprüche

1. Vorrichtung (1) zur Herstellung eines aufgebrühten aromatischen Getränks mit einer Kapsel (2), die eine oder mehrere aromatische Essenzen zur Herstellung eines Aufgusses enthält, und einer Ausgabevorrichtung (3), die der Kapsel (2) zugeordnet werden kann, **dadurch gekennzeichnet, dass** die Vorrichtung (1) mindestens einen ersten Ausgabeweg (4) und einen zweiten Ausgabeweg (5) hat, wobei der erste und der zweite hydraulische Weg (4, 5) hydraulisch voneinander getrennt sind und beide (4, 5) der Kapsel (2) zugeordnet sind, sowie Zwangspositionierungsmittel zwischen der Kapsel (2) und der Ausgabevorrichtung (3).

2. Vorrichtung zur Herstellung eines aufgebrühten aromatischen Getränks nach Anspruch 1, **dadurch gekennzeichnet, dass** die Zwangspositionierungsmittel eine Ausnehmung (6) in der Kapsel (2) mit einem Vorsprung (7) in passender Form der Ausgabevorrichtung (3) oder umgekehrt umfassen.

3. Vorrichtung zur Herstellung eines aufgebrühten aromatischen Getränks nach Anspruch 2, **dadurch gekennzeichnet, dass** die Ausnehmung (6) an einer Basis (8) der Kapsel (2) angeordnet ist.

4. Vorrichtung zur Herstellung eines aufgebrühten aromatischen Getränks nach einem der vorhergehenden Ansprüche, **dadurch gekennzeichnet, dass** die Ausgabevorrichtung mindestens ein jeweiliges erstes Abteil (9) und ein zweites Abteil (10) umfasst, die hydraulisch voneinander getrennt sind und den jeweiligen ersten Ausgabeweg (4) und den zweiten Ausgabeweg (5) aufweisen, wobei das jeweilige erste und zweite Abteil (9, 10) ein jeweiliges erstes Fenster (11) und zweites Fenster (12) haben, die sich zur Ankoppelung an einen jeweiligen ersten Abschnitt (13) und zweiten Abschnitt (14) der Basis (8) der Kapsel (2) eignen.

5. Vorrichtung zur Herstellung eines aufgebrühten aromatischen Getränks nach Anspruch 4 in Kombination mit Anspruch 2 oder 3, **dadurch gekennzeichnet, dass** das erste (11) und das zweite (12) Fenster auf der gegenüberliegenen Seite bezüglich des Vorsprungs (7) positioniert sind.

6. Vorrichtung zur Herstellung eines aufgebrühten aromatischen Getränks nach Anspruch 3, **dadurch gekennzeichnet, dass** sich die Ausnehmung (6) entlang einem Durchmesser der Basis (8) der Kapsel (2) erstreckt.

7. Vorrichtung zur Herstellung eines aufgebrühten aromatischen Getränks nach Anspruch 3, **dadurch gekennzeichnet, dass** sich die Ausnehmung (6) exzentrisch entlang der Basis (8) der Kapsel (2) erstreckt.

8. Vorrichtung zur Herstellung eines aufgebrühten aromatischen Getränks nach einem der vorhergehenden Ansprüche, **dadurch gekennzeichnet, dass** die Kapsel (2) eine Basis (8) umfasst und im Wesentlichen ein Prisma mit einer mittleren Hauptachse (15) und einem polygonalen Querschnitt ist, der sich zur Basis (8) verjüngt.

9. Vorrichtung zur Herstellung eines aufgebrühten aromatischen Getränks nach einem der vorhergehenden Ansprüche, **dadurch gekennzeichnet, dass** mindestens eine der Essenzen Kaffee ist.

10. Vorrichtung zur Herstellung eines aufgebrühten aromatischen Getränks nach einem der vorhergehenden Ansprüche, **dadurch gekennzeichnet, dass** mindestens eine der Essenzen wasserlöslich ist.

11. Vorrichtung zur Herstellung eines aufgebrühten aromatischen Getränks nach Anspruch 4, **dadurch gekennzeichnet, dass** der jeweilige erste und zweite Abschnitt (13, 14) der Basis (8) ein jeweiliges erstes und zweites Loch (16, 17) zur Freigabe des Aufgusses in das jeweilige erste und zweite Abteil (9, 10) haben.

12. Vorrichtung zur Herstellung eines aufgebrühten aromatischen Getränks nach Anspruch 11, **dadurch gekennzeichnet, dass** das erste und das zweite Freigabeloch (16, 17) denselben Durchmesser haben.

13. Vorrichtung zur Herstellung eines aufgebrühten aromatischen Getränks nach Anspruch 11, **dadurch gekennzeichnet, dass** das erste und das zweite Freigabeloch (16, 17) unterschiedliche Durchmesser haben.

14. Vorrichtung zur Herstellung eines aufgebrühten aromatischen Getränks nach Anspruch 4, **dadurch gekennzeichnet, dass** die Kapsel (2) innen eine Trennwand (18) hat, die eine erste Kammer (19), die eine erste aromatische Essenz enthält und zu der der erste Basisabschnitt (13) gehört, und eine zweite Kammer (20) definiert, die eine zweite aromatische Essenz enthält und zu der der zweite Basisabschnitt (14) gehört.

15. Vorrichtung zur Herstellung eines aufgebrühten aromatischen Getränks nach Anspruch 14 in Kombination mit Anspruch 2 oder 3, **dadurch gekennzeichnet, dass** sich die Trennwand (18) von der Ausnehmung (6) und senkrecht zur Basis (8) erstreckt.

16. Vorrichtung zur Herstellung eines aufgebrühten aromatischen Getränks nach einem der vorhergehenden Ansprüche, **dadurch gekennzeichnet, dass** die Kapsel (2) einen ersten Filter (21) umfasst, der so aufgebracht ist, dass er ihr oberes Ende verschließt.

17. Vorrichtung zur Herstellung eines aufgebrühten aromatischen Getränks nach einem der vorhergehenden Ansprüche, **dadurch gekennzeichnet, dass** die Kapsel (2) einen zweiten Filter (23) umfasst, der auf eine Basis (8) der Kapsel aufgebracht ist.

18. Vorrichtung zur Herstellung eines aufgebrühten aromatischen Getränks nach einem der vorhergehenden Ansprüche, **dadurch gekennzeichnet, dass** die Kapsel (2) eine erste entfernbare Schutzlasche (24) an ihrem oberen Ende umfasst.

19. Vorrichtung zur Herstellung eines aufgebrühten aromatischen Getränks nach einem der vorhergehenden Ansprüche, **dadurch gekennzeichnet, dass** die Kapsel (2) eine zweite entfernbare Schutzlasche (25) der Basis (8) der Kapsel umfasst.

20. Vorrichtung zur Herstellung eines aufgebrühten aromatischen Getränks nach Anspruch 4, **dadurch gekennzeichnet, dass** sie eine Zufuhr von Aufgusswasser umfasst, die gezielt oder gleichzeitig in das erste und das zweite Abteil (9, 10) geht.

## Revendications

1. Appareil (1) pour produire une infusion de boisson aromatique, comprenant une capsule (2) contenant une ou plusieurs essences aromatiques permettant de préparer l'infusion, et un dispositif de distribution (3) pouvant être associé à ladite capsule (2), **caractérisé en ce que** l'appareil (1) a au moins un premier chemin de distribution (4) et un deuxième chemin de distribution (5), lesdits premier et deuxième chemins de distribution (4, 5) étant séparés hydrauliquement l'un de l'autre et étant tous deux (4, 5) associés à ladite capsule (2), et a des moyens de positionnement forcé situés entre ladite capsule (2) et ledit dispositif de distribution (3).

2. Appareil pour produire une infusion de boisson aromatique selon la revendication 1, **caractérisé en ce que** lesdits moyens de positionnement forcé comprennent un retrait (6) dans ladite capsule (2) avec une saillie (7) de forme complémentaire sur le dispositif de distribution (3), ou vice versa.

3. Appareil pour produire une infusion de boisson aromatique selon la revendication 2, **caractérisé en ce que** ledit retrait (6) est situé sur une base (8) de ladite capsule (2).

4. Appareil pour produire une infusion de boisson aromatique selon l'une quelconque des revendications précédentes, **caractérisé en ce que** ledit dispositif de distribution comprend au moins un premier compartiment respectif (9) et un deuxième compartiment (10) respectif, séparés hydrauliquement l'un de l'autre, ayant ledit premier chemin de distribution respectif (4) et ledit deuxième chemin de distribution respectif (5), lesdits premier et deuxième compartiments respectifs (9, 10) ayant une première fenêtre respective (11) et une deuxième fenêtre respective (12) adaptées pour créer une interface avec une première portion respective (13) et une deuxième portion respective (14) de ladite base (8) de la capsule (2).

5. Appareil pour produire une infusion de boisson aromatique selon la revendication 4, en association avec la revendication 2 ou la revendication 3, **caractérisé en ce que** lesdites première (11) et deuxième (12) fenêtres sont positionnées sur le côté opposé par rapport à ladite saillie (7).

6. Appareil pour produire une infusion de boisson aromatique selon la revendication 3, **caractérisé en ce que** ledit retrait (6) s'étend le long d'un diamètre de la base (8) de ladite capsule (2).

7. Appareil pour produire une infusion de boisson aromatique selon la revendication 3, **caractérisé en ce que** ledit retrait (6) s'étend de manière excentrée le long de la base (8) de ladite capsule (2).

8. Appareil pour produire une infusion de boisson aromatique selon l'une quelconque des revendications précédentes, **caractérisé en ce que** ladite capsule (2) comprend une base (8) et est substantiellement un prisme avec un axe central principal (15) et une section transversale polygonale, effilée vers ladite base (8).

9. Appareil pour produire une infusion de boisson aromatique selon l'une quelconque des revendications précédentes, **caractérisé en ce qu'**au moins l'une desdites essences est du café.

10. Appareil pour produire une infusion de boisson aromatique selon l'une quelconque des revendications précédentes, **caractérisé en ce qu'**au moins l'une desdites essences est soluble dans l'eau.

11. Appareil pour produire une infusion de boisson aromatique selon la revendication 4, **caractérisé en ce que** lesdites première et deuxième portions respectives (13, 14) de ladite base (8) ont des premiers et deuxièmes trous respectifs (16, 17) pour permettre le passage de l'infusion dans lesdits premier et deuxième compartiments respectifs (9, 10).

12. Appareil pour produire une infusion de boisson aromatique selon la revendication 11, **caractérisé en ce que** lesdits premiers et deuxièmes trous de diffusion (16, 17) ont le même diamètre.

13. Appareil pour produire une infusion de boisson aromatique selon la revendication 11, **caractérisé en ce que** lesdits premiers et deuxièmes trous de diffusion (16, 17) ont un diamètre différent.

14. Appareil pour produire une infusion de boisson aromatique selon la revendication 4, **caractérisé en ce que** ladite capsule (2) a une paroi de séparation (18) à l'intérieur, qui définit une première chambre (19) pour contenir une première essence aromatique, à laquelle appartient ladite première portion de base (13), et une deuxième chambre (20) pour contenir une deuxième essence aromatique, à laquelle appartient ladite deuxième portion de base (14).

15. Appareil pour produire une infusion de boisson aromatique selon la revendication 14, en association avec la revendication 2 ou la revendication 3, **caractérisé en ce que** ladite paroi de séparation (18) s'étend depuis ledit retrait (6) et perpendiculairement à ladite base (8).

16. Appareil pour produire une infusion de boisson aromatique selon l'une quelconque des revendications précédentes, **caractérisé en ce que** ladite capsule (2) comprend un premier filtre (21) appliqué de manière à fermer son extrémité supérieure.

17. Appareil pour produire une infusion de boisson aromatique selon l'une quelconque des revendications précédentes, **caractérisé en ce que** ladite capsule (2) comprend un deuxième filtre (23) appliqué à une base (8) de la capsule.

18. Appareil pour produire une infusion de boisson aromatique selon l'une quelconque des revendications précédentes, **caractérisé en ce que** ladite capsule (2) comprend une première languette de protection amovible (24) sur son extrémité supérieure.

19. Appareil pour produire une infusion de boisson aromatique selon l'une quelconque des revendications précédentes, **caractérisé en ce que** ladite capsule (2) comprend une deuxième languette de protection amovible (25) sur la base (8) de la capsule.

20. Appareil pour produire une infusion de boisson aromatique selon la revendication 4, **caractérisé en ce qu'**il comprend une alimentation en eau d'infusion, sélectivement ou simultanément dans lesdits premier et deuxième compartiments (9, 10).
